# EUROPEAN PATENT SPECIFICATION

(11) **EP 1 896 306 B1**
(45) Date of publication and mention of the grant of the patent: **06.04.2016**
(21) Application number: 06754623.4
(22) Date of filing: 29.06.2006
(51) Int. Cl.: B60S 1/52

(54) **METHOD OF USE OF A WIPING DEVICE**
VERFAHREN ZUR VERWENDUNG EINER WISCHVORRICHTUNG
PROCÉDÉ D'UTILISATION D'UN DISPOSITIF D'ESSUIE-GLACE

(30) Priority: 29.06.2005 DE 102005030201
(43) Date of publication of application: 12.03.2008
(73) Proprietor: VALEO SYSTEMES D'ESSUYAGE, 78321 La Verrière (FR)
(72) Inventor: EGNER-WALTER, Bruno, 74076 Heilbronn (DE); SCHÄUBLE, Michael, 71665 Vaihingen/Enz (DE)
(74) Representative: Callu Danseux, Violaine
(86) International application number: PCT/EP2006/006310
(87) International publication number: WO 2007/000346

(56) References cited:
- DE-A1- 2 216 752
- DE-A1- 2 310 165
- DE-A1- 10 000 373
- DE-A1- 10 058 455
- GB-A- 1 493 597
- US-A1- 2002 005 211

## Description

The invention relates to a method of use of a wiping device according to the preamble of Patent Claim 1 and therein, specifically, to a wiping devices with a so called "wet wiping blade", having numerous spray of nozzle openings for introducing a washing of cleaning fluid onto a vehicle windshield. Some of these spray or nozzle openings are arranged along one side of the wiper blade, and some of them on the other side, and for this purpose, for instance partially, provided on the respective side of the wiper blade. Such a wiping device is disclosed in US 2002/0005211 A1.

Further wiping blades/wiping devices are known in various versions, such as DE 100 00 373, EP 1 209 050, EP 1 400 422. Another known form (DE 100 58 455) is the wiping device and/or its spray device which has spray or nozzle openings, formed such that selective of the spray or nozzle openings means that only those openings which lie in the wiping direction are opened; that is, those openings which are arranged on the side which is moving ahead, which is then obtained by - for instance - a more complex formation or shape of the wiping rubber/the rubber-elastic wiper strip.

The aim of the invention is to obtain improved wiping or cleaning quality with the thriftiest possible use of the washing or cleaning fluid. To reach this aim, a method of use of a wiping device is formed according to Patent Claim 1.

In the wiping device according to the invention, with activation of the spray device, the windshield washing system or its pump, at least with the first movement of the wiper blade, that is, with the initial movement of the wiping blade from the home position in the direction from which it reverses its direction, a larger quantity of washing or cleaning fluid is ejected along the side of the wiper blade which is ahead of the other side in the wiper motion out of the spray or nozzle openings which are arranged on this wiper side, than on the other side of the wiper blade, which follows in the first movement and leads in the return movement (B).

In the sense of the invention, the "initial movement" is the movement of the wiper blade in the direction of the home position/reversal position, and the "return movement" is the movement in the direction of the reversal position/home position.

Furthermore, in the wiper device according to the invention, the wiper blade has at least one wiping rubber or wiping blade, already known per se, which lie against the vehicle windshield with at least one wiping lip and with this wiping lip, define a wiping blade plane which lies across the plane of the vehicle and includes the length of the wiper blade.

The spray or nozzle rays assigned to one longitudinal side of the wiper blade are, in the sense of the invention, such rays which strike the vehicle windshield on the same side of a wiper plane on which the corresponding longitudinal side of the wiping blade is also located. The spray or nozzle openings assigned to one longitudinal side of the wiper blade are therefore the nozzle openings which are assigned to such spray or nozzle rays.

The spray or nozzle openings which are assigned to one longitudinal side of the wiper blade are, for instance, provided on this longitudinal side of the wiper blade or arranged and oriented along the wiper blade such that the spray rays which are ejected from the spray or nozzle openings strike the vehicle windshield on the same side of the wiper blade plane on which the respective side of the wiper blade is provided.

The ejection of the greater quantity of washing or cleaning fluid on the longitudinal side of the wiper blade which leads in the initial movement can be realized in various ways, as will be subsequently described.

Good cleaning results are obtained with thrifty use of cleaning fluid if the washing/cleaning solution is provided on both longitudinal sides of the wiper blade while the wiper blade, that is, the windshield washing system, is activated, so that rays of fluid are ejected on both longitudinal wiper sides both in the initial movement and in the return movement.

With particularly preferred embodiments of the invention, means for controlling the ejection of the washing or cleaning fluid depending on the direction of motion of the wiper blade / of at least one wiper arm are provided such that the washing or cleaning fluid is only ejected from the spray or nozzle openings which are located on the respective longitudinal side of the wiper blade that is currently moving ahead. This produces an even thriftier use of the washing fluid. Furthermore, obstruction of visibility which is otherwise caused by the washing or cleaning fluid ejected behind the wiper blade which is in motion across the windshield is avoided, thereby increasing traffic safety.

The invention is explained in the following with reference to the figures, using various embodiment examples. The following are shown:
- Fig. 1: a cross-section through a wiper blade, together with a vehicle window, for instance, a vehicle windshield;
- Fig. 2 - 7: in simplified schematic views, various embodiments of a wiping device, consisting of a wiper blade and a wiper arm.

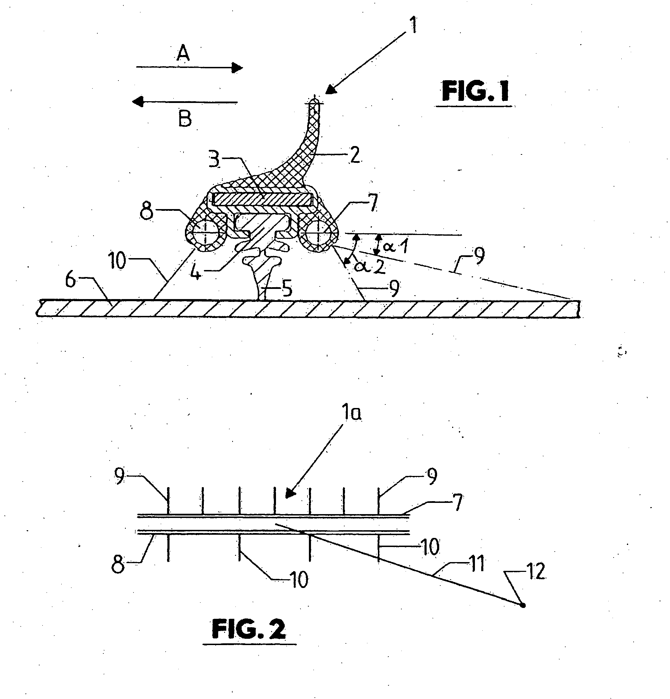

Figure 1 shows 1 as a flat wiper blade with a spoiler in a windshield wiper arrangement, consisting of a wiper blade body 2 which forms the spoiler and is produced from two different synthetic material in the depicted embodiment, a spring rail 3 which is produced from spring steel and included in this wiper blade body 2, as well as a wiper blade 4 which is produced from a rubber-elastic material and rests against a vehicle window 6 with a wiper lip 5.

The wiper blade 1 is, for instance, held in the common manner with an adapter not shown in Figure 1, on a wiper arm of the wiping device, both of which are also not shown in this figure.

In the wiper blade body 2, two spray or fluid channels 7 and 8 are formed, respectively one channel along each wiper blade side of the wiper blade 1 on the sides of the wiper strip 4. The fluid channels 7 and 8 are linked by means of a suitable, at least partially hose-formed connection to a source from which these channels are filled with a washing or cleaning fluid, namely water with possible additives, under pressure when the wiper system is operated / the spray process is activated.

When operating the wiping device, the wiper blade 1 is moved by the swinging wiper arm in an initial movement from a starting or home position or a position adjacent to this according to Arrow A of Figure 1 in the direction of a turning position and in a return position from the turning position according to Arrow B in the direction of the home position. Herein, the right longitudinal side of the wiper blade in Figure 1, which has the fluid channel 7, is that longitudinal side of the wiper blade which leads in the initial movement A, and the left longitudinal side of the wiper blade in Figure 1 which has the fluid channel 8 is that longitudinal side of the wiper blade which follows in the initial movement A and leads in the return movement B.

The fluid channels 7 and 8 are, respectively, equipped with numerous successive spray or nozzle openings which are arranged along the longitudinal side of the wiper blade 1; namely the fluid channel 7 with spray or nozzle openings for ejection of liquid rays 9 of the washing or cleaning fluid, and the fluid channel 8 with spray or nozzle openings for ejection of liquid rays 10 of the washing or cleaning fluid. The rays of liquid are respectively bent at an angle towards the outer surface of the vehicle.

In order to obtain optimal cleaning or wiping results with the thriftiest possible use of the washing or cleaning liquid, particularly already during the first wipe across the vehicle window 6 with the wiper blade 1, that is, for instance, after activation of the spray device with the first movement of the wiper blade 1 from the home position into the reversal position and back from this position into the home position, this spray device which is formed by the fluid channels 7 and 8 and the respective spray or nozzle openings is formed so that after activation of the spray process, a larger quantity of washing or cleaning fluid is ejected onto the vehicle window out of the spray or nozzle openings along the wiper blade side which leads the other side in the initial wiper motion A, that is, from the spray or nozzle openings of the fluid channel 7, than out of the spray or nozzle openings which are arranged on the other side of the wiper blade, which follows in the initial movement A and leads in the return movement (B); that is, from the spray or nozzle openings of fluid channel 8.

For this purpose, for instance, the overall opening cross-section of the spray or nozzle openings of the fluid channel 7 is greater than the overall opening cross-section of the spray or nozzle openings of the fluid channel 8, which can be accomplished by a larger number of spray or nozzle openings or by a larger opening cross-section of the spray or nozzle openings on channel 7. Furthermore, there is the option of supplying the cleaning and washing fluid to the fluid channel 7 at least during the initial movement A with pressure which is higher than the pressure in the fluid channel 8. Various combinations of the previously named measures are also feasible.

Good cleaning results are obtained when the washing or cleaning fluid is ejected simultaneously from the openings on both longitudinal sides of the wiper blade both during the initial movement A and during the return movement B.

However, preference is given to embodiments of the invention in which the ejection of the fluid rays 9 and 10 takes place with dynamic control with the motion of the wiper blade 1 / the wiper arm, namely such that during the initial movement A, the washing or cleaning fluid is only ejected from the spray or nozzle openings of the fluid channel 7 to form the fluid rays 9, and in the return movement B, washing or cleaning fluid is only ejected from the spray or nozzle openings of the fluid channel 8 to form the fluid rays 10, wherein furthermore, at least during the first initial movement A, the quantity of the ejected washing fluid is greater than the quantity of the washing fluid ejected during the return movement B. Control takes place, for instance, through a valve arrangement which is operated with the wiper arm. Other measures, such as the use of a controllable pump with a reversible direction of rotation for transporting the washing fluid, are also feasible.

Specifically, the fluid channel 7 in the embodiment shown in Figure 1 has at least two groups of spray or nozzle openings whose fluid rays 9 strike the vehicle window 6 at differing angles α1 and α2, and which are arranged in the longitudinal direction of the wiper blade in alternate succession or in another arrangement.

Figures 2-7 show a simplified image of various embodiments of the wiping device according to the invention.

Figure 2 shows a wiping device consisting of a wiper blade 1 a and a wiper arm 11, wherein the wiper arm 11 carries the wiper blade 1 a on one end, and whose other end is fastened at 12 to a shaft with a reversing drive 12 for the swinging or wiping motion.

The wiper blade 1 a is, for instance, formed in accordance with the wiper blade 1, but definitely has spray or nozzle openings for forming the fluid rays 9 or 10 on both longitudinal wiper blade sides, wherein the number of spray or nozzle openings and therefore the number of fluid rays 9 on the longitudinal wiper blade side which leads in the initial movement A is greater than on the longitudinal wiper blade side which follows in the initial movement A and leads in the return movement B. The arrangement of the spray or nozzle openings is furthermore made so that - vertically to the longitudinal direction of the wiper blade 1a - one spray or nozzle opening for a fluid ray 10 lies opposite to a spray or nozzle opening 9; however, between every two successive spray or nozzle openings for the fluid rays 10, a further spray or nozzle opening is provided for a fluid ray 9. When activating the spray process, the quantity of the washing or cleaning fluid which is ejected on the wiper blade side which leads during the initial movement A is therefore greater than on the wiper blade side which leads during the return movement B.

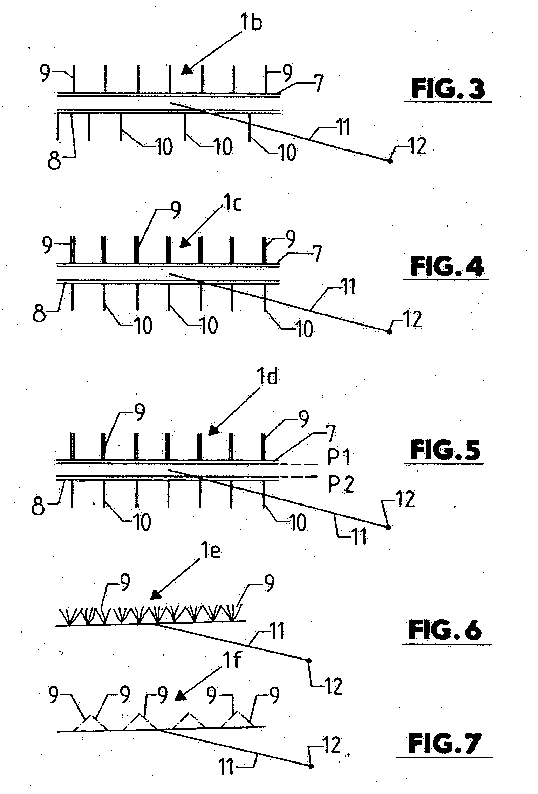

Figure 3 shows a wiper device consisting of the wiper arm 11 and the wiper blade 1 b. In this wiping device as well, the number of spray or nozzle openings on the longitudinal wiper blade side which leads in the initial movement A is greater than on the longitudinal wiper blade side which leads in the return movement B. This embodiment does, however, differentiate itself from the embodiment in Figure 2 in that the spray or nozzle openings for the fluid rays 10 and the spray or nozzle openings for the fluid rays 9 are arranged so that they alternate, rather than being directly opposite each other.

Due to the large number of spray or nozzle openings for the fluid rays 9 and the shifted arrangement of the spray or nozzle openings, a particularly even distribution of the washing or cleaning fluid on the vehicle window 6 is obtained.

Figure 4 shows a wiping device consisting of the wiper arm 11 and a wiper blade 1 c, which differentiates itself from the wiper blade 1 a in that each spray or nozzle opening for a fluid ray 10 lies opposite a spray or nozzle opening for a fluid ray 9; however, the spray or nozzle openings for the fluid rays 9 have a comparatively larger opening cross-section than the spray or nozzle openings for the fluid rays 10. In this embodiment, when the spray process is activated, the quantity of the washing or cleaning fluid which is ejected via the spray or nozzle openings on the longitudinal wiper blade side which leads in the initial movement A is therefore greater than on the longitudinal wiper blade side which leads in the return movement B.

Figure 5 shows a wiping device consisting of the wiper arm 11 and the wiper blade 1d. In this embodiment, the fluid channel 7 which is assigned to the fluid rays 9 is supplied with the washing or cleaning fluid - at least during the initial movement A - with a pressure P1 which is greater than the pressure P2 in the fluid channel 8 which is assigned to the fluid rays 10, so that this alone, even with an equal opening cross-section of the spray or nozzle openings, means that a greater quantity of washing or cleaning fluid is ejected onto the vehicle window 6 on the longitudinal wiper blade side which leads in the initial movement, than on the longitudinal wiper blade side which leads in the return movement B.

Figure 6 shows a further possible embodiment of a wiping device with a wiper blade 1 e and a wiper arm 11. Figure 6 shows only the fluid rays 9. The respective spray and nozzle openings on the longitudinal wiper blade side which leads in the initial movement A are formed in this embodiment so that the fluid rays 9 form so-called wide or fan rays and strike the vehicle window in this form, so that the washing or cleaning fluid is applied particularly evenly onto the vehicle window 6 along this longitudinal wiper blade side.

Figure 7 shows a further possible embodiment in the form of a wiping device which consists of the wiper arm 11 and the wiper blade 1f. In this figure as well, only the spray or fluid rays 9 which are ejected on the longitudinal wiper blade side which leads in the initial movement A are shown. Through corresponding formation and orientation of the spray or nozzle openings, the fluid rays 9 are formed as so-called point rays and oriented to each other such that at least, respectively, two fluid rays 9 collide with each other prior to striking the vehicle window 6, thereby forming a kind of droplet fog due to which the washing or cleaning fluid is distributed as evenly as possible on the vehicle window 6.

In figures 6 and 7, the shown embodiments are like the other embodiments in that the quantity of washing or cleaning fluid ejected on the longitudinal wiper blade side which leads in the initial movement A is greater than on the longitudinal wiper blade side which leads in the return movement B.

Specifically in the description of Figure 1, it was assumed that two spray or fluid channels 7 and 8 are provided. Fundamentally, it is also possible to supply the spray or nozzle openings which generate the fluid rays 9 and 10 via a single, joint channel that transports the washing and cleaning fluid, or to provide more than two fluid channels - for instance, two such channels with their respective spray or nozzle openings on the longitudinal wiper blade side of the respective wiper blade which leads in the initial movement A.

The invention was described above using examplary embodiments. It is understood that numerous other changes and variations, and particularly also combinations of the precedingly named examplary embodiment are feasible, without departing from the invention idea upon which the invention is based, as defined in the claims.

For instance, it is possible to arrange the spray or nozzle openings on the longitudinal wiper blade side which leads in the return movement so that the fluid rays are ejected onto the vehicle window at different angles, and/or to arrange the spray and nozzle openings so that the angle of the fluid rays is generally different on both longitudinal wiper blade sides.

### List of reference symbols

- 1, 1a - 1f: Wiper blade
- 2: Wiper blade body
- 3: Spring rail
- 4: Wiper rail
- 5: Wiper lip
- 6: Vehicle window
- 7, 8: Spray or fluid channel
- 9, 10: Spray or fluid ray
- 11: Wiper arm
- 12: Shaft

- A, B: Direction of movement of the wiper blade
- P1, P2: Pressure
- α1, α2: Ejection angle of the fluid rays referred to a plane parallel to the vehicle window

## Claims

1. Method of use of a wiping device for vehicle windows, which wiper device comprises :
- a wiper blade (1, 1a-f) on at least one wiper arm (11), wherein the wiper blade (1, 1a-f) is intended for an initial movement (A) from a home position into a reversal position and a return movement (B) from the reversal position into the direction of the home position, and
- a spray device comprising numerous spray or nozzle openings which are arranged successively in a longitudinal wiper blade direction and assigned to two longitudinal wiper blade sides, for the purpose of ejection of a washing or cleaning fluid onto the vehicle window (6), wherein
- the wiper blade (1, 1 a-f) has at least two spray or fluid channels (7, 8), wherein the at least two spray or fluid channels (7, 8) comprises at least one separate spray or fluid channel (7, 8) for the spray or nozzle openings which are arranged on the longitudinal wiper blade side that leads in the initial movement (A), and at least one specific spray or fluid channel (8) for the spray or nozzle openings which are arranged on the longitudinal wiper blade side which leads in the return movement (B), **characterized in that**
- after activation of the spray and wiping process and during the first wipe across of the vehicle window with the wiper blade, a greater quantity of washing or cleaning fluid is ejected on the longitudinal wiper blade side which leads in the initial movement (A), at least during the first initial movement (A) of the wiper blade (1, 1a-f), than on the longitudinal wiper blade side which follows in the initial movement and leads in the return movement (B).

2. Method of use of a wiping device according to Claim 1, **characterized in that** the spray device is formed so that after activation of the spray and wiping process, and during the first one to five initial movements (A) of the wiper blade (1, 1a-f), the quantity of washing or cleaning fluid which is ejected along the longitudinal wiper blade side which leads in this initial movement (A) is greater than on the longitudinal wiper blade side which follows in the initial movement (A) and leads in the return movement (B).

3. Method of use of a wiping device according to Claim 1, **characterized in that** the spray device is formed so that after activation of the spray and wiping process, during every initial movement (A) of the wiper blade (1, 1a-f), the quantity of washing or cleaning fluid which is ejected along the longitudinal wiper blade side which leads in this initial movement (A) is greater than on the longitudinal wiper blade side which follows in the initial movement (A) and leads in the return movement (B).

4. Method of use of a wiping device according to Claim 1, 2 or 3, **characterized in that** the number of spray or nozzle openings which are arranged on the longitudinal wiper blade side which leads in the initial movement (A) is greater than the number of spray and nozzle openings which are arranged on the longitudinal wiper blade side which leads in the return movement (B).

5. Method of use of a wiping device according to one of the preceding claims, **characterized in that** the overall opening cross-section of the spray or nozzle openings which are arranged on the longitudinal wiper blade side which leads in the initial movement (A) is larger than the overall opening cross-section of the spray or nozzle openings which are arranged on the longitudinal wiper blade side which leads in the return movement (B).

6. Method of use of a wiping device according to Claim 5, **characterized in that** at least a part of the spray or nozzle openings which are arranged on the longitudinal wiper blade side which leads in the initial movement (A) has a larger opening cross-section than the spray or nozzle openings which are arranged on the longitudinal wiper blade side which leads in the return movement (B).

7. Method of use of a wiping device according to one of the preceding claims, **characterized in that** means are provided in order to supply the spray or nozzle openings which are arranged on the longitudinal wiper blade side that leads in the initial movement (A) with washing or cleaning fluid at a greater pressure than the spray or nozzle openings which are arranged on the longitudinal wiper blade side that leads in the return movement (B).

8. Method of use of a wiping device according to one of the preceding claims, **characterized in that** means are provided for controlling the ejection of the washing or cleaning fluid in dependency on the direction of motion of the wiper blade (1, 1a-f), or at least one wiper arm (11), such that the washing or cleaning fluid is, respectively, ejected only from those spray or nozzle openings which are arranged such that the washing or cleaning fluid is, respectively, ejected only from those spray or nozzle openings which are arranged on the longitudinal wiper blade side that leads in the respective motion.

9. Method of use of a wiping device according to one of the preceding claims, **characterized in that** each spray or nozzle opening which is arranged on the longitudinal wiper blade side that leads in the return movement (B) is, vertically to the longitudinal axis of the wiper blade side, opposed by a nozzle opening which is arranged on the longitudinal wiper blade side that leads in the initial movement (A).

10. Method of use of a wiping device according to Claim 9, **characterized in that** further spray or nozzle openings are arranged on that longitudinal wiper blade side which leads in the initial movement (A), in addition to such spray or nozzle openings which, respectively, lie opposite one of the spray or nozzle openings that are arranged on the other longitudinal wiper blade side.

11. Method of use of a wiping device according to one of the preceding claims, **characterized in that** at least a number of those spray or nozzle openings which are provided on the longitudinal wiper blade side which leads in the initial movement (A) are arranged in alternate positions to the spray or nozzle openings on the other longitudinal wiper blade side.

12. Method of use of a wiping device according to one of the preceding claims, **characterized in that** at least some spray or nozzle openings, preferably some spray or nozzle openings which are arranged on the longitudinal wiper blade side which leads in the initial movement (A), are formed so as to eject fluid rays in the form of wide or fan shaped rays.

13. Method of use of a wiping device according to one of the preceding claims, **characterized in that** at least some of the spray or nozzle openings, preferably spray or nozzle openings which are arranged on the longitudinal wiper blade side which leads in the initial movement (A), are formed and oriented so that they eject fluid rays, preferably point rays, which are directed so that they collide with each other.

14. Method of use of a wiping device according to one of the preceding claims, **characterized in that** the spray or nozzle openings are, at least mostly, arranged along the two longitudinal wiper blade sides or near these longitudinal sides.

15. Method of use of a wiping device according to one of the preceding claims, **characterized in that** the spray or nozzle openings are formed and oriented so that they form fluid rays (9, 10) which strike the vehicle window (6) at or below an angle (α1, α2).

16. Method of use of a wiping device according to one of the preceding claims, **characterized in that** the spray or nozzle openings of one longitudinal wiper blade side, preferably the spray or nozzle openings which are arranged on the longitudinal wiper blade side which leads in the initial movement (A), form at least two groups whose fluid rays (9, 10) show differing orientations, that is, for instance, they strike the vehicle window at differing angles.

17. Method of use of a wiping device according to one of the preceding claims, **characterized in that** the wiper blade has at least one joint spray or fluid channel for the spray or nozzle openings which are arranged on the longitudinal wiper blade side that leads in the initial movement (A) and for the spray or nozzle openings which are arranged on the longitudinal wiper blade side that leads in the return movement (B).

18. Method of use of a wiping device according to one of the preceding claims, **characterized in that** the vehicle window is a windshield or rear window of a road vehicle.

19. Method of use of a wiping device according to one of the preceding claims, **characterized in that** the wiper blade (1, 1a-f) is formed as a flat wiper blade.

20. Method of use of a wiping device according to one of the preceding claims, **characterized in that** at least one spray or fluid channel (7, 8) as well as the respective spray or nozzle openings, is/are provided in a wiper blade body (2) on which at least one wiper rail (4) which forms at least one wiper lip (5) made from a rubber-elastic material is provided.

## Patentansprüche

1. Verfahren zum Verwenden einer Wischvorrichtung für Fahrzeugfenster, welche Wischervorrichtung umfasst:
ein Wischerblatt (1, 1a-f) an mindestens einem Wischerarm (11), wobei das Wischerblatt (1, 1a-f) für eine anfängliche Bewegung (A) aus einer Ausgangsposition in eine Umkehrposition und eine Rückkehrbewegung (B) aus der Umkehrposition in die Richtung der Ausgangsposition vorgesehen ist, und eine Sprühvorrichtung, welche mehrere Sprüh- oder Düsenöffnungen aufweist, welche zum Zweck des Ausstoßes eines Wasch- oder Reinigungsfluids auf das Fahrzeugfenster (6) hintereinander in einer longitudinalen Richtung des Wischerblatts angeordnet sind, wobei
- das Wischerblatt (1, 1a-f) mindestens zwei Sprüh- oder Fluidkanäle (7, 8) besitzt, wobei die mindestens zwei Sprüh- oder Fluidkanäle (7, 8) mindestens einen separaten Sprüh- oder Fluidkanal (7, 8) für die Sprüh- oder Düsenöffnungen, welche an der longitudinalen Seite des Wischerblatts, welche bei der anfänglichen Bewegung (A) voreilt, angeordnet sind, und mindestens einen spezifischen Sprüh- und Fluidkanal (8) für die Sprüh- oder Düsenöffnungen, welche an der longitudinalen Seite des Wischerblatts angeordnet sind, welche bei der Rückkehrbewegung (B) voreilt, aufweisen, **dadurch gekennzeichnet, dass**
- nach Aktivierung des Sprüh- und Wischprozesses und während des ersten Wischens des Wischerblatts über das Fahrzeugfenster eine größere Menge an Wasch- oder Reinigungsfluid an der longitudinalen Seite des Wischerblatts, welches bei der anfänglichen Bewegung (A) voreilt, zumindest während der anfänglichen Bewegung (A) ausgestoßen wird, als an der longitudinalen Seite des Wischerblatts (1, 1a-f), welche bei der anfänglichen Bewegung nachfolgt und bei der Rückkehrbewegung (B) voreilt.

2. Verfahren zum Verwenden einer Wischvorrichtung nach Anspruch 1, **dadurch gekennzeichnet, dass** die Sprühvorrichtung so ausgebildet ist, dass nach Aktivierung des Sprüh- und Wischprozesses und während der ersten ein bis fünf anfänglichen Bewegungen (A) des Wischerblatts (1, 1a-f) die Menge an Wasch- oder Reinigungsfluid, welche entlang der longitudinalen Seite des Wischerblatts, welche bei dieser anfänglichen Bewegung (A) voreilt, ausgestoßen wird, größer als an der longitudinalen Seite des Wischerblatts ist, welche bei der anfänglichen Bewegung (A) nachfolgt und bei der Rückkehrbewegung (B) voreilt.

3. Verfahren zum Verwenden einer Wischvorrichtung nach Anspruch 1, **dadurch gekennzeichnet, dass** die Sprühvorrichtung so ausgebildet ist, dass nach Aktivierung des Sprüh- und Wischprozesses während jeder anfänglichen Bewegungen (A) des Wischerblatts (1, 1a-f) die Menge an Wasch- oder Reinigungsfluid, welche entlang der longitudinalen Seite des Wischerblatts, welche bei dieser anfänglichen Bewegung (A) voreilt, ausgestoßen wird, größer als an der longitudinalen Seite des Wischerblatts ist, welche bei der anfänglichen Bewegung (A) nachfolgt und bei der Rückkehrbewegung (B) voreilt.

4. Verfahren zum Verwenden einer Wischvorrichtung nach Anspruch 1, 2 oder 3, **dadurch gekennzeichnet, dass** die Anzahl an Sprüh- oder Düsenöffnungen, welche an der longitudinalen Seite des Wischerblatts, welche bei der anfänglichen Bewegung (A) voreilt, angeordnet sind, größer als die Anzahl an Sprüh- oder Düsenöffnungen ist, welche an der longitudinalen Seite des Wischerblatts angeordnet sind, welche bei der Rückkehrbewegung (B) voreilt.

5. Verfahren zum Verwenden einer Wischvorrichtung nach einem der vorhergehenden Ansprüche, **dadurch gekennzeichnet, dass** die gesamte Öffnungsquerschnittsfläche der Sprüh- oder Düsenöffnungen, welche an der longitudinalen Seite des Wischerblatts, welche bei der anfänglichen Bewegung (A) voreilt, angeordnet sind, größer als die gesamte Öffnungsquerschnittsfläche der Sprüh- oder Düsenöffnungen ist, welche an der longitudinalen Seite des Wischerblatts angeordnet sind, welche bei der Rückkehrbewegung (B) voreilt.

6. Verfahren zum Verwenden einer Wischvorrichtung nach Anspruch 5, **dadurch gekennzeichnet, dass** mindestens ein Teil der Sprüh- oder Düsenöffnungen, welche an der longitudinalen Seite des Wischerblatts, welche bei der anfänglichen Bewegung (A) voreilt, angeordnet sind, eine größere Öffnungsquerschnittsfläche besitzt als die Sprüh- oder Düsenöffnungen, welche an der longitudinalen Seite des Wischerblatts angeordnet sind, welche bei der Rückkehrbewegung (B) voreilt.

7. Verfahren zum Verwenden einer Wischvorrichtung nach einem der vorhergehenden Ansprüche, **dadurch gekennzeichnet, dass** Mittel vorgesehen sind, um die Sprüh- oder Düsenöffnungen, welche an der longitudinalen Seite des Wischerblatts, welche bei der anfänglichen Bewegung (A) voreilt, angeordnet sind mit Wasch- oder Reinigungsfluid mit einem höheren Druck zu versorgen als die Sprüh- oder Düsenöffnungen, welche an der longitudinalen Seite des Wischerblatts angeordnet sind, welche bei der Rückkehrbewegung (B) voreilt.

8. Verfahren zum Verwenden einer Wischvorrichtung nach einem der vorhergehenden Ansprüche, **dadurch gekennzeichnet, dass** Mittel vorgesehen sind zum Steuern des Ausstoßes des Wasch- oder Reinigungsfluids in Abhängigkeit von der Bewegungsrichtung des Wischerblatts (1, 1a-f) oder mindestens eines Wischerarms (11), so dass das Wasch- oder Reinigungsfluid jeweils nur aus solchen Sprüh- oder Düsenöffnungen ausgestoßen wird, welche derartig angeordnet sind, dass das Wasch- oder Reinigungsfluid jeweils nur von solchen Sprüh- und Düsenöffnungen ausgestoßen wird, welche an der longitudinalen Seite des Wischerblatts angeordnet sind, welche bei der jeweiligen Bewegung voreilt.

9. Verfahren zum Verwenden einer Wischvorrichtung nach einem der vorhergehenden Ansprüche, **dadurch gekennzeichnet, dass** jede Sprüh- oder Düsenöffnung, welche an der longitudinalen Seite des Wischerblatts, welche bei der Rückkehrbewegung (B) voreilt, senkrecht zur longitudinalen Achse der Seite des Wischerblatts einer Düsenöffnung gegenüber liegt, welche an der longitudinalen Seite des Wischerblatts angeordnet ist, welche bei der anfänglichen Bewegung (A) voreilt.

10. Verfahren zum Verwenden einer Wischvorrichtung nach Anspruch 9, **dadurch gekennzeichnet, dass** weitere Sprüh- oder Düsenöffnungen an der longitudinalen Seite des Wischerblatts, welche bei der anfänglichen Bewegung (A) voreilt, angeordnet sind, zusätzlich zu solchen Sprüh- und Düsenöffnungen angeordnet sind, welche jeweils einer der Sprüh- und Düsenöffnungen gegenüber liegen, welche an der anderen longitudinalen Seite des Wischerblatts angeordnet sind.

11. Verfahren zum Verwenden einer Wischvorrichtung nach einem der vorhergehenden Ansprüche, **dadurch gekennzeichnet, dass** mindestens ein Anzahl von diesen Sprüh- oder Düsenöffnungen, welche an der longitudinalen Seite des Wischerblatts, welche bei der anfänglichen Bewegung (A) voreilt, in zu den Sprüh- und Düsenöffnungen der anderen longitudinalen Seite des Wischerblatts abwechselnden Positionen angeordnet sind.

12. Verfahren zum Verwenden einer Wischvorrichtung nach einem der vorhergehenden Ansprüche, **dadurch gekennzeichnet, dass** mindestens einige Sprüh- oder Düsenöffnungen, vorzugsweise einige Sprüh- oder Düsenöffnungen, welche an der longitudinalen Seite des Wischerblatts, welche bei der anfänglichen Bewegung (A) voreilt, angeordnet sind, ausgebildet sind, um Fluidstrahlen in der Form von breiten oder fächerförmigen Strahlen auszustoßen.

13. Verfahren zum Verwenden einer Wischvorrichtung nach einem der vorhergehenden Ansprüche, **dadurch gekennzeichnet, dass** mindestens einige der Sprüh- oder Düsenöffnungen, vorzugsweise Sprüh- oder Düsenöffnungen, welche an der longitudinalen Seite des Wischerblatts, welche bei der anfänglichen Bewegung (A) voreilt, angeordnet sind, so ausgebildet und ausgerichtet sind, dass sie Fluidstrahlen ausstoßen, vorzugsweise Punktstrahlen, welche so gerichtet sind, dass sie miteinander kollidieren.

14. Verfahren zum Verwenden einer Wischvorrichtung nach einem der vorhergehenden Ansprüche, **dadurch gekennzeichnet, dass** die Sprüh- oder Düsenöffnungen zumindest meistens entlang der beiden longitudinalen Seiten der Wischerblätter oder in der Nähe dieser longitudinalen Seiten angeordnet sind.

15. Verfahren zum Verwenden einer Wischvorrichtung nach einem der vorhergehenden Ansprüche, **dadurch gekennzeichnet, dass** die Sprüh- oder Düsenöffnungen so ausgebildet und ausgerichtet sind, dass sie Fluidstrahlen (9, 10) bilden, welche das Fahrzeugfenster (6) mit einem oder unter weniger als einem Winkel (α₁, α₂) treffen.

16. Verfahren zum Verwenden einer Wischvorrichtung nach einem der vorhergehenden Ansprüche, **dadurch gekennzeichnet, dass** die Sprüh- oder Düsenöffnungen einer longitudinalen Seite des Wischerblatts, vorzugsweise die Sprüh- oder Düsenöffnungen, welche an der longitudinalen Seite des Wischerblatts, welche bei der anfänglichen Bewegung (A) voreilt, angeordnet sind, mindestens zwei Gruppen bilden, deren Fluidstrahlen (9, 10) verschiedene Orientierungen zeigen, das heißt zum Beispiel, sie treffen das Fahrzeugfenster unter verschiedenen Winkeln.

17. Verfahren zum Verwenden einer Wischvorrichtung nach einem der vorhergehenden Ansprüche, **dadurch gekennzeichnet, dass** das Wischerblatt mindestens einen gemeinsamen Sprüh- oder Fluidkanal für die Sprüh- oder Düsenöffnungen, welche an der longitudinalen Seite des Wischerblatts, welche bei der anfänglichen Bewegung (A) voreilt, angeordnet sind und für die Sprüh- oder Düsenöffnungen besitzt, welche an der longitudinalen Seite des Wischerblatts angeordnet sind, welche bei der Rückkehrbewegung (B) voreilt.

18. Verfahren zum Verwenden einer Wischvorrichtung nach einem der vorhergehenden Ansprüche, **dadurch gekennzeichnet, dass** das Fahrzeugfenster eine Windschutzscheibe oder eine Heckscheibe eines Straßenfahrzeugs ist.

19. Verfahren zum Verwenden einer Wischvorrichtung nach einem der vorhergehenden Ansprüche, **dadurch gekennzeichnet, dass** das Wischerblatt (1, 1a-f) als ein flaches Wischerblatt gebildet ist.

20. Verfahren zum Verwenden einer Wischvorrichtung nach einem der vorhergehenden Ansprüche, **dadurch gekennzeichnet, dass** mindestens ein Sprüh- oder Fluidkanal (7, 8) sowie die jeweiligen Sprüh- oder Düsenöffnungen in einem Wischerblatt-Körper (2) vorgesehen ist/sind, an dem mindestens eine Wischerschiene (4) vorgesehen ist, welche mindestens eine Wischerlippe (5) bildet, die aus gummielastischem Material hergestellt ist.

## Revendications

1. Procédé d'utilisation d'un dispositif d'essuie-glace pour vitres de véhicule, lequel dispositif d'essuie-glace comprend :
- un balai (1, 1a-f) d'essuie-glace sur au moins un bras (11) d'essuie-glace, dans lequel le balai (1, 1a-f) d'essuie-glace est conçu pour effectuer un mouvement initial (A) d'une position de repos à une position de renversement du sens de marche et un mouvement de retour (B) de la position de renversement de marche à la position de repos, et
- un dispositif de pulvérisation comprenant de nombreuses ouvertures de pulvérisation ou de gicleur qui sont disposées l'une après l'autre dans la direction longitudinale du balai d'essuie-glace et affectées à deux côtés longitudinaux du balai d'essuie-glace, dans le but d'éjecter un liquide de lavage ou de nettoyage sur la vitre (6) du véhicule,
dans lequel le balai (1, 1a-f) d'essuie-glace comporte au moins deux canaux (7, 8) de pulvérisation ou de liquide,
dans lequel lesdits canaux (7, 8) de pulvérisation ou de liquide comprennent au moins un canal séparé (7, 8) de pulvérisation ou de liquide pour les ouvertures de pulvérisation ou de gicleur qui sont disposées sur le côté longitudinal du balai d'essuie-glace qui va devant dans le mouvement initial (A) et au moins un canal spécifique (8) de pulvérisation ou de liquide pour les ouvertures de pulvérisation ou de gicleur qui sont disposées sur le côté longitudinal du balai d'essuie-glace qui va devant dans le mouvement de retour (B),
**caractérisé en ce que**
- après activation du processus de pulvérisation et d'essuyage et pendant le premier essuyage d'un côté à l'autre de la vitre du véhicule avec le balai d'essuie-glace, une plus grande quantité de liquide de lavage ou de nettoyage est éjectée sur le côté longitudinal du balai d'essuie-glace qui va devant dans le mouvement initial (A), au moins pendant le premier mouvement initial (A) du balai (1, 1a-f) d'essuie-glace, que sur le côté longitudinal du balai d'essuie-glace qui suit dans le mouvement initial et va devant dans le mouvement de retour (B).

2. Procédé d'utilisation d'un dispositif d'essuie-glace selon la revendication 1, **caractérisé en ce que** le dispositif de pulvérisation est constitué de sorte qu'après activation du processus de pulvérisation et d'essuyage et pendant les premiers (un à cinq) mouvements initiaux (A) du balai (1, 1a-f) d'essuie-glace, la quantité de liquide de lavage ou de nettoyage qui est éjectée le long du côté longitudinal du balai d'essuie-glace qui va devant dans ce mouvement initial (A) est plus grande que sur le côté longitudinal du balai d'essuie-glace qui suit dans le mouvement initial (A) et va devant dans le mouvement de retour (B).

3. Procédé d'utilisation d'un dispositif d'essuie-glace selon la revendication 1, **caractérisé en ce que** le dispositif de pulvérisation est constitué de sorte qu'après activation du processus de pulvérisation et d'essuyage, pendant chaque mouvement initial (A) du balai (1, 1a-f) d'essuie-glace, la quantité de liquide de lavage ou de nettoyage qui est éjectée le long du côté longitudinal du balai d'essuie-glace qui va devant dans ce mouvement initial (A) est plus grande que sur le côté longitudinal du balai d'essuie-glace qui suit dans le mouvement initial (A) et va devant dans le mouvement de retour (B).

4. Procédé d'utilisation d'un dispositif d'essuie-glace selon la revendication 1, 2 ou 3, **caractérisé en ce que** le nombre d'ouvertures de pulvérisation ou de gicleur qui sont disposées sur le côté longitudinal du balai d'essuie-glace qui va devant dans le mouvement initial (A) est plus grand que le nombre d'ouvertures de pulvérisation ou de gicleur qui sont disposées sur le côté longitudinal du balai d'essuie-glace qui va devant dans le mouvement de retour (B).

5. Procédé d'utilisation d'un dispositif d'essuie-glace selon l'une quelconque des revendications précédentes, **caractérisé en ce que** la section d'orifice hors-tout des ouvertures de pulvérisation ou de gicleur qui sont disposées sur le côté longitudinal du balai d'essuie-glace qui va devant dans le mouvement initial (A) est plus grande que la section d'orifice hors-tout des ouvertures de pulvérisation ou de gicleur qui sont disposées sur le côté longitudinal du balai d'essuie-glace qui va devant dans le mouvement de retour (B).

6. Procédé d'utilisation d'un dispositif d'essuie-glace selon la revendication 5, **caractérisé en ce qu'**au moins une partie des ouvertures de pulvérisation ou de gicleur qui sont disposées sur le côté longitudinal du balai d'essuie-glace qui va devant dans le mouvement initial (A) a une section d'orifice plus grande que celle des ouvertures de pulvérisation ou de gicleur qui sont disposées sur le côté longitudinal du balai d'essuie-glace qui va devant dans le mouvement de retour (B).

7. Procédé d'utilisation d'un dispositif d'essuie-glace selon l'une quelconque des revendications précédentes, **caractérisé en ce que** des moyens sont mis en place pour alimenter les ouvertures de pulvérisation ou de gicleur qui sont disposées sur le côté longitudinal du balai d'essuie-glace qui va devant dans le mouvement initial (A) en liquide de lavage ou de nettoyage sous une pression plus élevée que pour les ouvertures de pulvérisation ou de gicleur qui sont disposées sur le côté longitudinal du balai d'essuie-glace qui va devant dans le mouvement de retour (B).

8. Procédé d'utilisation d'un dispositif d'essuie-glace selon l'une quelconque des revendications précédentes, **caractérisé en ce que** des moyens sont mis en place pour commander l'éjection du liquide de lavage ou de nettoyage en fonction de la direction du mouvement du balai (1, 1a-f) d'essuie-glace dudit bras (11) d'essuie-glace de telle sorte que le liquide de lavage ou de nettoyage ne soit respectivement éjecté qu'à partir des ouvertures de pulvérisation ou de gicleur qui sont disposées de telle sorte que le liquide de lavage ou de nettoyage ne soit respectivement éjecté qu'à partir des ouvertures de pulvérisation ou de gicleur qui sont disposées sur le côté longitudinal du balai d'essuie-glace qui va devant dans le mouvement correspondant.

9. Procédé d'utilisation d'un dispositif d'essuie-glace selon l'une quelconque des revendications précédentes, **caractérisé en ce que** chaque ouverture de pulvérisation ou de gicleur qui est disposée sur le côté longitudinal du balai d'essuie-glace qui va devant dans le mouvement de retour (B) est, perpendiculairement à l'axe longitudinal du côté du balai d'essuie-glace, en face d'une ouverture de gicleur qui est disposée sur le côté longitudinal du balai d'essuie-glace qui va devant dans le mouvement initial (A).

10. Procédé d'utilisation d'un dispositif d'essuie-glace selon la revendication 9, **caractérisé en ce qu'**autres ouvertures de pulvérisation ou de gicleur sont disposées sur le côté longitudinal du balai d'essuie-glace qui va devant dans le mouvement initial (A) en plus de celles qui se trouvent chacune en face d'une des ouvertures de pulvérisation ou de gicleur qui sont disposées sur l'autre côté longitudinal du balai d'essuie-glace.

11. Procédé d'utilisation d'un dispositif d'essuie-glace selon l'une quelconque des revendications précédentes, **caractérisé en ce qu'**au moins un certain nombre de ces ouvertures de pulvérisation ou de gicleur qui sont disposées sur le côté longitudinal du balai d'essuie-glace qui va devant dans le mouvement initial (A) sont disposées en positions alternées par rapport aux ouvertures de pulvérisation ou de gicleur sur l'autre côté longitudinal du balai d'essuie-glace.

12. Procédé d'utilisation d'un dispositif d'essuie-glace selon l'une quelconque des revendications précédentes, **caractérisé en ce qu'**au moins certaines ouvertures de pulvérisation ou de gicleur, de préférence certaines ouvertures de pulvérisation ou de gicleur qui sont disposées sur le côté longitudinal du balai d'essuie-glace qui va devant dans le mouvement initial (A), sont constituées de façon à éjecter des faisceaux liquides sous forme de faisceaux larges ou en éventail.

13. Procédé d'utilisation d'un dispositif d'essuie-glace selon l'une quelconque des revendications précédentes, **caractérisé en ce qu'**au moins certaines des ouvertures de pulvérisation ou de gicleur, de préférence des ouvertures de pulvérisation ou de gicleur qui sont disposées sur le côté longitudinal du balai d'essuie-glace qui va devant dans le mouvement initial (A), sont constituées et orientées de façon à éjecter des faisceaux liquides, de préférence des faisceaux ponctuels, qui sont dirigés de façon à ce qu'ils se heurtent l'un avec l'autre.

14. Procédé d'utilisation d'un dispositif d'essuie-glace selon l'une quelconque des revendications précédentes, **caractérisé en ce que** les ouvertures de pulvérisation ou de gicleur sont, au moins pour la plupart, disposées le long des deux côtés longitudinaux du balai d'essuie-glace ou près de ces côtés longitudinaux.

15. Procédé d'utilisation d'un dispositif d'essuie-glace selon l'une quelconque des revendications précédentes, **caractérisé en ce que** les ouvertures de pulvérisation ou de gicleur sont constituées et orientées de façon à former des faisceaux liquides (9, 10) qui frappent la vitre (6) du véhicule à ou sous un angle (α1, α2).

16. Procédé d'utilisation d'un dispositif d'essuie-glace selon l'une quelconque des revendications précédentes, **caractérisé en ce que** les ouvertures de pulvérisation ou de gicleur d'un côté longitudinal du balai d'essuie-glace, de préférence les ouvertures de pulvérisation ou de gicleur qui sont disposées sur le côté longitudinal du balai d'essuie-glace qui va devant dans le mouvement initial (A), constituent au moins deux groupes dont les faisceaux liquides (9, 10) montrent des orientations différentes, c'est-à-dire, par exemple, qu'ils frappent la vitre du véhicule sous des angles différents.

17. Procédé d'utilisation d'un dispositif d'essuie-glace selon l'une quelconque des revendications précédentes, **caractérisé en ce que** le balai d'essuie-glace comporte au moins un canal commun de pulvérisation ou de gicleur pour les ouvertures de pulvérisation ou de gicleur qui sont disposées sur le côté longitudinal du balai d'essuie-glace qui va devant dans le mouvement initial (A) et pour les ouvertures de pulvérisation ou de gicleur qui sont disposées sur le côté longitudinal du balai d'essuie-glace qui va devant dans le mouvement de retour (B).

18. Procédé d'utilisation d'un dispositif d'essuie-glace selon l'une quelconque des revendications précédentes, **caractérisé en ce que** la vitre du véhicule est un pare-brise ou une lunette arrière d'un véhicule routier.

19. Procédé d'utilisation d'un dispositif d'essuie-glace selon l'une quelconque des revendications précédentes, **caractérisé en ce que** le balai (1, 1a-f) d'essuie-glace est conformé en balai d'essuie-glace plat.

20. Procédé d'utilisation d'un dispositif d'essuie-glace selon l'une quelconque des revendications précédentes, **caractérisé en ce qu'**au moins un canal (7, 8) de pulvérisation ou de liquide ainsi que les ouvertures respectives de pulvérisation ou de gicleur, est/sont disposé (s) dans le corps (2) de balai d'essuie-glace, sur lequel est disposé au moins une baleine (4) d'essuie-glace qui forme au moins une raclette (5) d'essuie-glace faite d'une matière élastique/caoutchouc.
